# EUROPÄISCHE PATENTANMELDUNG

(11) **EP 1 346 631 A2**
(43) Veröffentlichungstag der Anmeldung: **24.09.2003**
(21) Anmeldenummer: 03006451.3
(22) Anmeldetag: 21.03.2003
(51) Int. Cl.: A01J 5/04, A01J 9/06

(54) **Aerosolfilter**

(30) Priorität: 21.03.2002 AT 4392002; 21.03.2002 AT 4402002
(71) Anmelder: WestfaliaSurge GmbH, 59302 Oelde (DE)
(72) Erfinder: Vogelauer, Rudolf, 3270 Scheibbs (AT); Schulze-Wartenhorst, Bernhard, 48231 Warendorf (DE); Suhr, Olaf, 59302 Oelde (DE)
(74) Vertreter: Neumann, Ditmar

(57) **Zusammenfassung**

Zur Separation einer bestimmten Flüssigkeitsmenge, z. B. eines Gemelks aus einem luft- und flüssigkeitsführenden Schlauchsystem, vorzugsweise einem Melkzeug, wird vor dessen Anschlussstelle an ein Rohrleitungssystem, beispielsweise einer Melkanlage, ein Separationsbehälter (20) eingesetzt, über dessen Verschlusseinheit (23), insbesondere den Deckel die Anbindung des Separationsbehälters (20) and das Rohrleitungssystem mittels eines Vakuumschlauchs (26) unter Vakuum erfolgt. Der Separationsbehälter (20) kann derart an das Rohrleitungssystem z. B. einer Melkanlage angeschlossen werden, dass weder die zu separierende Flüssigkeit noch Aerosole des Luftstroms in das Rohrleitungssystem übertreten können. Hierzu ist eine Filtereinrichtung (1) vorgesehen, die in Strömungsrichtung der Luft (36) betrachtet vor dem Rohrleitungssystem (26) angeordnet ist, die wenigstens ein Filterelement (33) enthält, das zum Rückhalt von Aerosolen in der Luft dient. Darüber hinaus weist der Separationsbehälter (20) eine Überlaufsicherung (37) auf, die zum Rückhalt der Flüssigkeit dient, wenn im Separationsbehälter (20) ein kritisches Flüssigkeitsniveau erreicht worden ist. Bei Melkanlagen kann es auch zweckmäßig sein, einen Vakuumschlauch vorzusehen, der eine Filtereinrichtung (1) nach der Erfindung umfasst.

## Beschreibung

Der Gegenstand der Erfindung bezieht sich auf eine Filtereinrichtung, einen Vakuumschlauch, eine Verschlusseinheit sowie auf einen Separationsbehälter zur Separation eines Gemelks.

Durch die US-Patentschrift 4,344,385 ist ein Separationsbehälter zum Separieren eines Gemelks, mit einem ersten Anschlussstutzen für einen Vakuumschlauch und einem zweiten Anschlussstutzen für einen Milchschlauch bekannt. Ein solcher Separationsbehälter wird nach der US 4,344,385 dann verwendet, wenn das Gemelk separiert werden soll. Die Notwendigkeit einer Separation des Gemelkes kann dann auftreten, wenn der Gehalt an schädlichen Keimen in dem Gemelk zu hoch ist, so dass das Gemelk von der Sammelmilch getrennt aufgefangen werden muss.

Mit fortschreitender Automatisierung des Melkprozesses führen unterschiedliche Gründe zu der Notwendigkeit nicht nur Gemelke mit besonders hohem Keimgehalt von der Sammelmilch abzutrennen, sondern es kann auch aufgrund der Veränderung der Milchqualität eine getrennte Ableitung dieser Milch erforderlich sein. Weiterhin wäre ein Gesamtgemelk von der Sammelmilch zu trennen, wenn in einem führenden, mit dem Melksystem datentechnisch verbundenen Herdenmanagement-System die Anweisung hinterlegt ist, das Gemelk eines bestimmten Melkplatz automatisch identifizierten Tieres abzutrennen. Durch die WO 96/22679 ist eine Vorrichtung zur Separierung von Gemelken bekannt. Die Vorrichtung zur Separierung von Gemelken aus Melkzeugen in Melkanlagen weist eine Steuereinheit auf, einen Separationsbehälter sowie eine Umschalteinrichtung zur wahlweisen Verbindung einer Melkleitung mit einer Milchleitung oder einer zum Abscheidebehälter führenden Zulaufleitung. Der Separationsbehälter ist über eine Verbindungsleitung mit der Milchleitung verbunden. Eine erste Ablaufleitung des Separationsbehälters ist mit einer Förderpumpe und einem ersten Rückschlagventil versehen.

Durch die W0 96/22679 ist eine weitere alternative Ausgestaltung einer Vorrichtung zur Separierung von Gemelken aus Melkzeugen in Melkanlagen bekannt. Die Vorrichtung weist eine Steuereinheit, einen Separationsbehälter und eine Umschalteinrichtung zur Wahlweisen Verbindung einer Melkleitung mit einer Milchleitung oder eines Separationsbehälter führenden Zulaufleitung. Der Separationsbehälter ist mit der Milchleitung über eine Verbindungsleitung verbunden, in der eine Ventileinrichtung angeordnet ist. Die Ventileinrichtung steht mit der Atmosphäre in Verbindung. Eine erste Ablaufleitung des Abscheidebehälters ist mit einem ersten Rückschlagventil versehen.

Problematisch bei den bekannten Separationsbehältern sowie den bekannten Vorrichtungen zur Separierung von Gemelken aus Melkzeugen in Melkanlagen ist, dass die Möglichkeit besteht, dass Teile des Gemelks und/oder Bestandteile des Gemelks in das dem Separationsbehälter nachfolgende Rohrleitungssystem, insbesondere das luft- bzw. milchführende Leitungssystem der Melkanlage gelangen kann. Diese Gefahr besteht insbesondere dann, wenn die zu separierende Gemelkmenge größer ist als das nutzbare Volumen des zur Separation verwendeten Behälters, es also zu einer Überfüllung des Separationsbehälters (Melkeimer, Melkkanne) kommt.

Die Gefahr, dass Teile des Gemelks in das luft- oder milchführende Leitungssystem gelangen kann, ist zwar bereits erkannt worden, die zur Behebung des Problems vorgeschlagene Lösung ist jedoch nicht ausreichend. Durch die US 5,138,977 ist eine Konstruktion einer Verschlusseinheit für einen Separationsbehälter bekannt. Diese Verschlusseinheit weist einen Schwimmkörper in Form einer Kugel auf, die eine Öffnung in der Verschlusseinheit verschließt, wenn ein hinreichend hoher Flüssigkeitsspiegel im Behälter erreicht worden ist.

Hiervon ausgehend liegt der vorliegenden Erfindung die Zielsetzung zugrunde die Nachteile des Standes der Technik zu beheben.

Diese Zielsetzung wird erfindungsgemäß durch eine Filtereinrichtung mit den Merkmalen des Anspruchs 1, einen Vakuumschlauch mit den Merkmalen des Anspruchs 20, eine Verschlusseinheit mit den Merkmalen des Anspruchs 23, einen Separationsbehälter mit Merkmalen des Anspruchs 27 bzw. durch einen Separationsbehälter mit den Merkmalen des Anspruchs 31 erreicht. Vorteilhafte Weiterbildungen und Ausgestaltungen sind Gegenstand der jeweiligen abhängigen Patentansprüche.

Gemäß einem ersten erfinderischen Gedanken wird eine Filtereinrichtung mit einem Filtergehäuse mit wenigstens einem Filterelement, das im Filtergehäuse angeordnet ist, wobei das Filterelement von einem Luftstrom aus einem Separationsbehälter für ein Gemelk durchströmbar ist, vorgeschlagen. Die Relevanz dieser Lösung wird dadurch deutlich, dass im Gegensatz zu dem Stand der Technik, wie er durch die US 5,138,977 bekannt ist, durch die Filtereinrichtung der Transport insbesondere von Aerosolen der Milch im Luftstrom aus dem Separationsbehälter herausgefiltert wird. Unter dem Begriff Gemelk wird nicht nur die Milchmenge, die ein Tier, insbesondere eine Kuh, während eines Melkvorgangs abgibt verstanden, sondern auch ein Teil oder Teile dieser Milchmenge verstanden.

Die Bedeutung dieser erfindungsgemäßen Lösung wird insbesondere im Falle der Separation eines antibiotikahaltigen Gemelks deutlich. Enthält aufgrund einer Therapie eutererkrankter Kühe das zu separierende Gemelk und deren Aerosole im Luftstrom, der zum Transport des Gemelks in den Separationsbehälter erforderlich ist, Antibiotika, so würden diese mit dem Luftstrom in das nachfolgende Leitungssystem eingebracht. Es findet eine Kontamination des Leitungssystems statt. Damit besteht die Gefahr, dass auch das weiterführende Leitungssystem und damit die Milch, die nicht schadstoffbelastet und damit nicht zur Separation bestimmt ist, mit diesen Antibiotika kontaminiert wird. Diese Kontaminationsgefahr wird durch die erfindungsgemäße Filtereinrichtung behoben. Fehlt eine erfindungsgemäße Filtereinrichtung, so besteht auch die Gefahr, dass es an den Wänden des Leitungssystems zu Ablagerungen kommt, durch die eine Querschnittsveränderung innerhalb des Leitungssystems eintreten kann. Dies bedeutet, insbesondere bei dem luftführenden Leitungssystem, dass die Druckverluste steigen, was mit einem erhöhten Energiebedarf verbunden ist, da die Vakuumpumpen mit einer höheren Leistung arbeiten müssen, um das vorgegebene (Melk)-Vakuum zu erzeugen. Findet eine Steigerung der Leistung der Vakuumpumpe nicht statt, so besteht die Gefahr, dass das Vakuum nicht mehr ausreichend ist, um eine befriedigende Melksituation zu erreichen.

Gemäß einer vorteilhaften Ausgestaltung der erfinderischen Filtereinrichtung wird vorgeschlagen, dass das Filterelement auswechselbar im Filtergehäuse angeordnet ist. Zur Vereinfachung des Auswechselvorgangs ist das Filtergehäuse der Filtereinrichtung mehrteilig ausgebildet. Durch diese Maßnahme wird auch eine verbesserte Funktionssicherheit der Filtereinrichtung erzielt. Der Austausch der Filterelemente ist auch vorteilhaft, um den Druckabfall zu minimieren, wenn eine Verstopfung des Filters eintritt. Grundsätzlich sollte die Filtereinrichtung so ausgelegt sein, dass ein möglichst geringer Druckabfall vorhanden ist und dass auch bei größeren Luftmengen, wie z. B. beim Ansetzen des Melkzeuges oder schlecht an der Zitze angebrachten Zitzenbechern auftreten.

Da das Filterelement, welches auch zum Ausfiltern von Aerosolen geeignet sein soll, ein sehr empfindliches Teil ist, besteht die Gefahr, dass bei einer unsachgemäßen Behandlung des Filterelementes während des Austausches, dieses beschädigt werden kann. Es wird daher nach einer weiteren vorteilhaften Ausgestaltung der Erfindung vorgeschlagen, dass die Filtereinrichtung einteilig ausgebildet ist. Die Filtereinrichtung wird dann insgesamt ausgetauscht. Hierdurch wird eine unsachgemäße Handhabung der Filtereinrichtung vermieden. Wird die Filtereinrichtung als ein Bauteil verwendet, so ist es zweckmäßig, wenn dieses konstruktiv so ausgestaltet ist, dass die Filtereinrichtung nur in einer vorgegebenen Ausrichtung eingebaut werden kann.

Für den Austausch des Filterelementes bzw. der Filtereinrichtung ist es von Vorteil, wenn die Möglichkeit gegeben ist, Kenntnisse über den Zustand der Filtereinrichtung bzw. des Filterelementes erhalten werden können. Hierzu wird vorgeschlagen, dass die Filtereinrichtung Anzeigemittel aufweist, die wenigstens eine Zustandsgröße des wenigstens einen Filterelementes wiedergeben. Bei den Anzeigemitteln kann es sich um optische und/oder akustische Mittel handeln. Bei den optischen Mitteln kann es sich beispielsweise um eine Farbanzeige handeln, die den Zustand des Filters wiedergeben. Es besteht auch die Möglichkeit, dass ein akustisches Signal ausgesendet wird, wenn die Filtereinrichtung einen kritischen Zustand erreicht hat.

Für die einfache optische Verifikation des Zustandes des Filterelementes bzw. der Filtereinrichtung wird nach einer weiteren vorteilhaften Ausgestaltung der Filtereinrichtung vorgeschlagen, dass das Filtergehäuse wenigstens einen durchsichtigen Bereich aufweist, durch den das wenigstens ein Filterelement erkennbar ist. Es besteht daher die Möglichkeit einer optischen Prüfung des Filterelementes.

Besonders vorteilhaft ist es, wenn der Zustand des Filterelementes durch Farbveränderung angezeigt werden kann. Hierzu weist das Filterelement vorzugsweise einen chemisch gebundenen Rezeptor auf, der auf ausgewählte Bestandteile, beispielsweise Antibiotika, reagiert. Die Rezeptoren können auch in Form von Beschichtungen auf dem Filterelement aufgebracht sein.

Das Filterelement kann auch so beschaffen sein, dass nicht nur eine Trennung des kontaminierenden Bestandteiles erzielt wird, sondern auch eine Bindung des Bestandteiles an das Filterelement. Hierbei kann es sich beispielsweise um eine chemische oder eine physikalische Bindung handeln.

Das Filterelement kann beispielsweise Luminol enthalten, welches mit Hämoglobin reagiert.

Gemäß einer noch weiteren vorteilhaften Weiterbildung der Filtereinrichtung wird vorgeschlagen, dass das wenigstens eine Filterelement ein Elektrofilter ist.

Das wenigstens ein Filterelement weist wenigstens einen Filter auf, der mit einem Träger verbunden ist. Der Träger bildet eine Stützkonstruktion für den Filter, so dass dieser so ausgebildet sein kann, dass auch kleinste Partikel ausgefiltert werden können, ohne dass ein hoher Druckverlust eintritt.

Nach einem noch weiteren Vorschlag weist die Filtereinrichtung wenigstens ein Filterelement auf, das im wesentlichen zylinderförmig ausgebildet ist. Insbesondere wird vorgeschlagen, dass ein solches zylinderförmiges Filterelement im Gehäuse der Filtereinrichtung angeordnet ist, wobei zwischen dem Innenmantel des Gehäuses und dem Filterelement ein im wesentlichen ringförmiger Raum vorgesehen ist, der von dem Luftstrom durchströmbar ist. Durch diese Maßnahme wird eine platzsparende Konstruktion erreicht. Andererseits wird eine relativ große Oberfläche des Filterelementes geschaffen.

Statt eines im wesentlichen zylinderförmig ausgebildeten Filterelementes können auch ringförmige oder scheibenförmige Filterelemente vorgesehen sein.

Bevorzugt ist eine Filtereinrichtung, bei der das Filtergehäuse einen Einlass und einen Auslass aufweist, wobei der durch den Einlass in das Filtergehäuse strömende Luftstrom in den Raum einströmt und durch das Filterelement zum Auslass strömt. Hierbei wird das Filterelement von außen nach innen durchströmt. Alternativ besteht die Möglichkeit, dass das Filtergehäuse ein Einlass und einen Auslass aufweist, wobei der durch den Einlass in das Filtergehäuse strömende Luftstrom durch das Filterelement durch den Raum und durch den Auslass durchströmt. Hierbei findet eine Durchströmung des Filterelementes von innen nach außen statt.

Soll die die Filtereinrichtung verlassende Luft möglichst rein sein, so wird vorgeschlagen, dass die Filtereinrichtung wenigstens zwei hintereinander durchströmbare Filterelemente aufweist.

Für relativ großen Luftvolumina, die durch die Filtereinrichtung strömen, wird vorgeschlagen, dass die Filtereinrichtung wenigstens zwei parallel durchströmbare Filterelemente aufweist.

Insbesondere wird vorgeschlagen, dass wenigstens ein Feinfilterelement und wenigstens ein Grobfilterelement vorgesehen sind. Durch das Grobfilterelement, welches in Strömungsrichtung betrachtet vor dem Feinfilterelement angeordnet ist, wird eine Vorfiltrierung erzielt.

Ist der für das zu separierende Gemelk verwendete Separationsbehälter von seinem Aufnahmevolumen her kleiner als das Gemelkvolumen, so besteht die Gefahr, dass das Gemelk in die Filtereinrichtung gelangt. Um dies zu vermeiden wird vorgeschlagen, dass in Strömungsrichtung betrachtet vor dem Filterelement wenigstens ein Sperrmittel vorgesehen ist, durch welches der Strömungsweg absperrbar ist. Hierdurch wird vermieden, dass das Gemelk in die Filtereinrichtung gelangt, was mit einer Zerstörung des Filterelementes einhergehen kann. Vorzugsweise ist das Sperrmittel so ausgebildet, dass dieses in Abhängigkeit von einer Flüssigkeit, insbesondere von Milch, aktiviert wird.

Vorzugsweise umfasst die erfinderische Filtereinrichtung eine Einheit, mittels derer eine Flüssigkeit, die durch das Filterelement zurückgehalten wird, gesammelt und/oder abgeschieden wird. Hierdurch wird die Verfügbarkeit der Filtereinrichtung verbessert, da die Funktionalität dieser nicht durch die Anwesenheit einer Flüssigkeitsmenge beeinträchtigt wird.

Nach einem weiteren erfinderischen Gedanken wird ein Vakuumschlauch zur Verbindung eines Separationsbehälters für ein Gemelk mit einer Leitung vorgeschlagen, bei der der Vakuumschlauch wenigstens eine Filtereinrichtung nach einem der Ansprüche 1 bis 19 umfasst. Durch diese Ausgestaltung des Vakuumschlauchs wird die Gefahr der Kontamination der nachführenden Leitungssysteme vermieden. Darüber hinaus hat ein solcher Vakuumschlauch weitere Vorteile.

Bevorzugt ist eine Ausbildung des Vakuumschlauchs, bei der die Filtereinrichtung wenigstens ein Filterelement (5) aufweist, welches mindestens einen scheibenförmigen Filter aufweist. Der scheibenförmige Filter ist dabei vorzugsweise so ausgebildet und angeordnet, dass dieser dem freien Strömungsquerschnitt des Schlauchs entspricht.

Der erfindungsgemäße Vakuumschlauch sowie die erfindungsgemäße Filtereinrichtung eigenen sich auch zur Nachrüstung bestehender Melkanlagen bzw. Melksysteme.

Insbesondere wird vorgeschlagen, dass der Vakuumschlauch eine Filtereinrichtung aufweist, die lösbar mit dem Vakuumschlauch verbunden ist. Hierdurch wird die Möglichkeit geschaffen eines Austausches der Filtereinrichtung.

Das Gehäuse der Filtereinrichtung kann auch ein integraler Bestandteil des Vakuumschlauchs sein. Hierdurch wird eine Integration der Filtereinrichtung in den Vakuumschlauch erzielt.

Nach einem noch weiteren erfinderischen Gedanken wird eine Verschlusseinheit, insbesondere ein Deckel für ein Separationsbehälter zur Separation eines Gemelks vorgeschlagen, wobei die Verschlusseinheit einen ersten Anschlussstutzen für einen Vakuumschlauch und einen zweiten Anschlussstutzen für einen Milchschlauch aufweist. Die erfindungsgemäße Verschlusseinheit weist wenigstens eine Filtereinrichtung mit wenigstens einem Filterelement auf, wobei das Filterelement im Strömungsweg eines Luftstroms am ersten Anschlussstutzen angeordnet ist. Die Dimensionierung der Verschlusseinheit ist vorzugsweise so gewählt, dass die Verschlusseinheit auch in Verbindung mit bereits bestehenden Separationsbehältern verwendbar ist. Dadurch, dass die Verschlusseinheit wenigstens eine Filtereinrichtung aufweist, wird das Ziel der Vermeidung der Kontamination nachfolgender Leitungssysteme durch Bestandteile des Gemelks, insbesondere durch Aerosole, erreicht.

Die Filtereinrichtung, welche die erfindungsgemäße Verschlusseinheit aufweist, ist vorzugsweise nach einem der Ansprüche 2 bis 19 ausgebildet. Die Vorteile einer solchen Filtereinrichtung treten in Kombination mit der Verschlusseinheit gleichfalls auf.

Gemäß einer noch weiteren vorteilhaften Ausgestaltung der Verschlusseinheit wird vorgeschlagen, dass diese eine Überlaufsicherung aufweist. Durch diese Überlaufsicherung wird ein Übertritt der zu separierenden Milch in das der Separationsstelle folgende Rohrleitungssystem, z. B. einer Melkanlage, effektiv verhindert.

Die Überlaufsicherung weist vorzugsweise einen Schwimmkörper auf, der dazu geeignet ist, eine Öffnung des ersten Anschlussstutzens zu verschließen.

Nach einem noch weiteren erfinderischen Gedanken ist ein Separationsbehälter zur Separation eines Gemelks mit einem ersten Anschlussstutzen für ein Vakuumschlauch und einem zweiten Anschlussstutzen für einen Milchschlauch vorgeschlagen, der sich dadurch auszeichnet, dass der Separationsbehälter wenigstens eine Filtereinrichtung mit wenigstens einem Filterelement aufweist, wobei das Filterelement im Strömungsweg eines Luftstroms zum ersten Anschlussstutzen angeordnet ist. Die Ausgestaltung der Filtereinrichtung erfolgt vorzugsweise entsprechend den vorteilhaften Ausbildungen der Filtereinrichtung nach einem der Ansprüche 2 bis 19.

Vorzugsweise weist der Separationsbehälter neben der Filtereinrichtung auch eine Überlaufsicherung auf. Die Überlaufsicherung ist vorzugsweise so ausgebildet, dass diese einen Schwimmkörper aufweist, der dazu geeignet ist, eine Öffnung des ersten Anschlussstutzens zu verschließen. Durch diese Maßnahme wird erreicht, dass das Gemelk aus dem Separationsbehälter nicht über den Anschlusssstutzen in das nachfolgende Leitungssystem gelangt.

Gemäß einem noch weiteren erfinderischen Gedanken wird ein Separationsbehälter zur Separation eines Gemelks mit einem Gehäuse, das eine Öffnung aufweist, die durch eine Verschlusseinheit verschließbar ist, vorgeschlagen. Die Verschlusseinheit weist einen ersten Anschlussstutzen für einen Vakuumschlauch und einen zweiten Anschlussstutzen für einen Milchschlauch auf. Die Verschlusseinheit des erfindungsgemäßen Separationsbehälters umfasst wenigstens eine Filtereinrichtung mit wenigstens einem Filterelement, wobei das Filterelement im Strömungsweg eines Luftstroms zum ersten Anschlussstutzen angeordnet ist. Ein solcher Separationsbehälter hat zahlreiche Vorteile. Insbesondere besteht die Möglichkeit die Verschlusseinheit insgesamt auszutauschen, wodurch die Stillstandzeiten bei einer schadhaften Verschlusseinheit in einer Melkanlage erheblich verringert werden können. Es besteht auch die Möglichkeit bestehende Separationsbehälter nachzurüsten.

Vorzugsweise weist der Separationsbehälter eine Verschlusseinheit auf, die nach einem der Ansprüche 23 bis 26 ausgebildet ist.

Weitere Einzelheiten und Vorteile werden anhand der in der Zeichnung dargestellten Ausführungsbeispiele erläutert, ohne dass der Gegenstand der Erfindung auf die konkreten Ausgestaltungen beschränkt wird.

Es zeigen:
- Fig. 1: schematisch in einem Längsschnitt ein Ausführungsbeispiel einer erfindungsgemäßen Filtereinrichtung und
- Fig. 2: schematisch und im Teilschnitt einen erfindungsgemäßen Separationsbehälter.

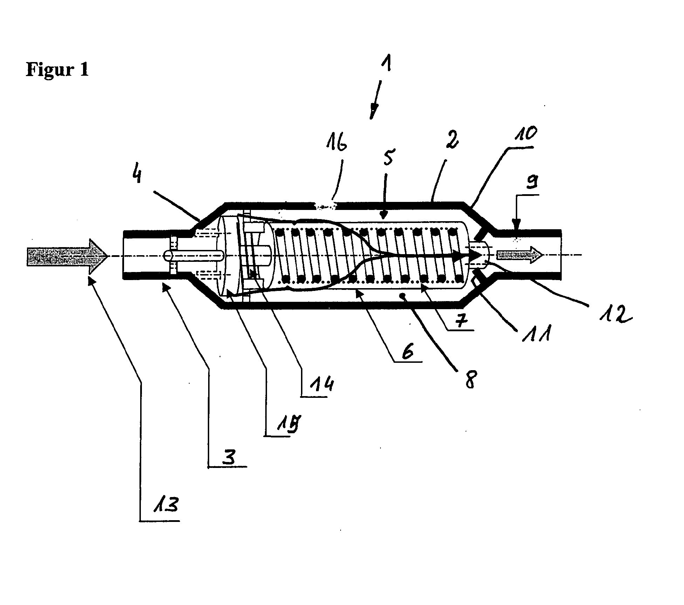

In der Figur 1 ist schematisch und im Längsschnitt ein Ausführungsbeispiel einer erfindungsgemäßen Filtereinrichtung 1 dargestellt. Die Filtereinrichtung 1 weist ein Filtergehäuse 2 auf. In dem dargestellten Ausführungsbeispiel ist das Filtergehäuse 2 im wesentlichen zylinderförmig ausgebildet. Es weist an einem Ende einen Einlass 3 auf. Der Einlass 3 ist rohrförmig ausgebildet. Der Außendurchmesser des Einlasses 3 ist vorzugsweise so ausgebildet, dass dieser in etwa einem Innendurchmesser eines Vakuumschlauchs entspricht. Es besteht auch die Möglichkeit, dass die Form und die Gestalt des Einlasses 3 so gewählt ist, dass die Filtereinrichtung 1 mit einem Separationsbehälter für Gemelke unmittelbar verbunden werden kann. Die Verbindung kann mit einer Verschlusseinheit, insbesondere einem Deckel des Separationsbehälters hergestellt sein. Dies ist nicht zwingend notwendig. Die Filtereinrichtung kann auch mit dem Separationsbehälter unmittelbar verbunden sein. Die Verbindung der Filtereinrichtung mit dem Separationsbehälter kann lösbar ausgestaltet sein. Vorzugsweise ist der Anschluss so gelegt, dass der Einlass oberhalb eines möglichen Flüssigkeitsspiegels innerhalb des Separationsbehälters liegt.

In Strömungsrichtung betrachtet weist das Filtergehäuse eine konische Erweiterung 4 auf.

Innerhalb des Filtergehäuses 2 ist ein Filterelement 5 vorgesehen. Das Filterelement 5 ist vorzugsweise auswechselbar im Filtergehäuse 2 angeordnet. Hierzu kann das Filtergehäuse zweiteilig ausgebildet sein. Die Teilungsebene liegt vorzugsweise in einer Längsebene.

Das Filterelement 5 weist einen Filter 6 auf. Der Filter 6 ist auf einem Träger 7 angeordnet. Der Träger 7 ist in dem dargestellten Ausführungsbeispiel wendelförmig ausgebildet. Bei dem Filter 6 handelt es sich vorzugsweise um ein dünnes Filtervlies, das auf den Filterträger 7 beispielsweise aufgerollt ist. Es besteht auch die Möglichkeit, dass der Filter 6 auf den Träger 7 aufgeschoben ist. In einer solchen Ausgestaltung ist der Filter 6 zylinderförmig ausgebildet, wobei ein vorderer Bereich des Filters 6 verschlossen ist.

Der Durchmesser des Filterelementes 5 ist in dem dargestellten Ausführungsbeispiel kleiner als der Innendurchmesser des Filtergehäuses 2, so dass zwischen dem Innenmantel des Filtergehäuses 2 und dem Filterelement 5 ein ringförmige Raum 8 ausgebildet ist.

Die Filtereinrichtung 1 weist einen Auslass 9 auf. Der Außendurchmesser des Auslasses 9 ist kleiner als der Durchmesser des Filtergehäuses. Das Filtergehäuse 2 weist eine konische Reduzierung 10 auf, die in den Einlass 9 übergeht.

Aus der Figur 1 ist ersichtlich, dass die konische Reduzierung 10 wenigstens ein Element 11 aufweist, welches zwei Funktionen hat. Zum einen wird durch das Element 11 ein vorderer Endabschnitt 12 des Filterelementes 5 gehalten, so dass das Filterelement 5 eine definierte Position innerhalb des Filtergehäuses 2 einnimmt. Zum anderen dient das Element 11 als Abdichtung.

Innerhalb des Gehäuses 2 ist ein Bereich 16 ausgebildet, der eine Beobachtung des Filters ermöglicht.

Mit dem Bezugszeichen 13 ist ein Luftstrom bezeichnet, der aus einem nicht dargestellten Separationsbehälter für ein Gemelk strömt. Der Luftstrom 13 gelangt über den Einlass 3 in den ringförmigen Raum 8. Von dem ringförmigen Raum 8 strömt die Luft durch den Filter 6 in das Filterelement 5. Die sich in dem Filterelement 5 befindende Luft strömt in axialer Richtung zum Aulass und verlässt diesen. Durch das Element 11 wird sichergestellt, dass der Luftstrom, der in den ringförmigen Raum 8 hineinströmt, nicht unmittelbar die Filtereinrichtung über den Aulass 9 verlässt.

In dem dargestellten Ausführungsbeispiel der Filtereinrichtung 1 weist diese benachbart zum Einlass 3 ein Sperrmittel 14 auf. Bei dem Sperrmittel 14 handelt es sich um eine federbelastete Sicherung. Strömt Luft in die Filtereinrichtung 1 ein, so gibt das Sperrmittel 14 den Strömungsweg frei, so dass der Luftstrom in den ringförmigen Raum 8 hineinströmen kann. In dem Fall, in dem eine Flüssigkeit, insbesondere ein Gemelk, durch den Einlass 3 zur Filtereinrichtung 1 strömen sollte, wird durch das Sperrmittel 14 der Strömungsweg verschlossen, so dass die Flüssigkeit (Milch) nicht zum Filterelement 5 gelangen kann. Das Sperrmittel 14 weist in dem dargestellten Ausführungsbeispiel einen Teller 15 auf, der federbelastet ist. In einer geschlossenen Stellung liegt zumindest ein Randbereich des Tellers 15 auf einem nicht dargestellten Sitz auf. Die Federkraft ist so eingestellt, dass das Sperrmittel 14 den Durchlass dann verschließt, wenn das in der Filtereinrichtung herrschende Vakuum abbricht.

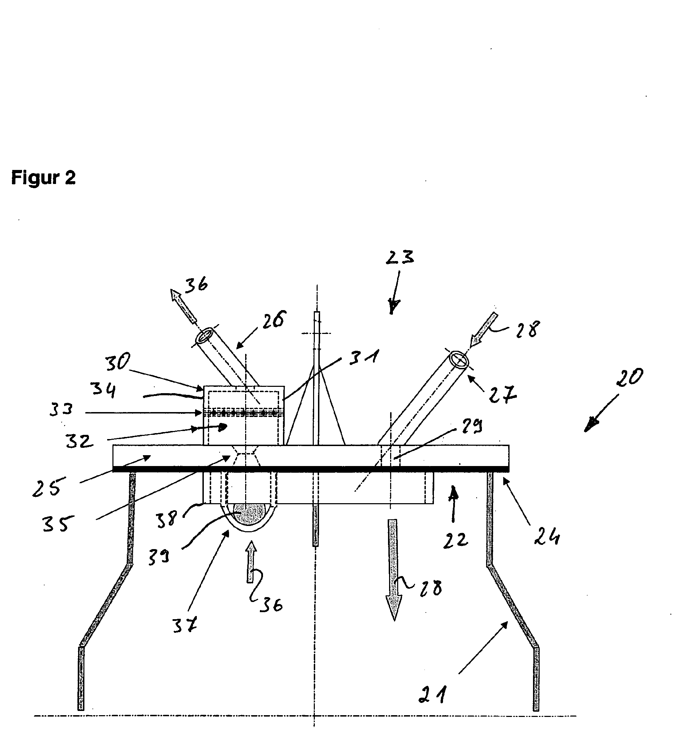

Figur 2 zeigt schematisch und im Teilschnitt einen Separationsbehälter 20, bei dem es sich um einen Melkeimer oder eine Milchkanne handelt, die zur Separation eines Gemelks verwendet wird.

Der Separationsbehälter 20 zur Separation eines Gemelks weist ein Gehäuse 21 auf, das eine Öffnung 22 hat. Die Öffnung 22 ist in dem dargestellten Ausführungsbeispiel durch eine Verschlusseinheit 23 verschlossen. Die Verschlusseinheit 23 ist mit dem Gehäuse 21 lösbar verbunden.

Zur Abdichtung ist zwischen der Verschlusseinheit 23 und dem Rand der Öffnung 22 ein Dichtring 24 angeordnet. Bei dem Dichtring 24 kann es sich um einen elastischen Dichtring handeln. Dieser kann aus einem Kunststoff, insbesondere einem elastomeren Kunststoff, vorzugsweise aus Gummi oder Silikon.

Auf dem Dichtring 24 liegt eine Platte 25 auf. Die Platte 25 ist mit einem ersten Anschlussstutzen 26 verbunden. Der Anschlussstutzen 26 dient zur Verbindung mit einem nicht dargestellten Vakuumschlauch.

Des weiteren ist ein zweiter Anschlussstutzen 27 vorgesehen, der mit einem Milchschlauch verbindbar ist. Durch den Pfeil 28 ist die Fließrichtung eines Gemelks angedeutet. Diese fließt durch den zweiten Anschlussstutzen 27 über eine Bohrung 29 in der Platte 25 in das Innere des Gehäuses 21 des Separationsbehälters 20.

Auf der Oberseite der Platte 25 ist eine Filtereinrichtung 39 angeordnet. Die Filtereinrichtung 30 umfasst ein zweiteiliges Filtergehäuse 31. Das Filtergehäuse 31 bildet eine Kammer 32, in der plattenförmige Filterelemente 33 angeordnet sind. Bei den plattenförmigen Filterelementen kann es sich um Grob- und Feinfilter handeln. Mit dem Deckel 34 des Filtergehäuses 31 ist der erste Anschlussstutzen 26 verbunden.

Die Kammer 32 der Filtereinrichtung 30 steht in Verbindung mit dem Innenraum des Separationsbehälters 20. Hierzu ist in der Platte 25 der Verschlusseinheit 23 eine Öffnung 35 vorgesehen.

Liegt am ersten Anschlussstutzen 26 Vakuum an, so strömt Luft aus dem Separationsbehälter 20 durch die Öffnung 35 in die Filtereinrichtung 30. Innerhalb der Filtereinrichtung 30 durchströmt die Luft die Filterelemente 33. Sie verlässt die Filtereinrichtung 30 durch den Anschlussstutzen 26. Während der Filterung der Luft werden Aerosole aus der Luft herausgefiltert. Der Luftstrom ist durch einen Pfeil mit der Kennzeichnungsnummer 36 in der Figur 2 dargestellt.

Um zu verhindern, dass das Gemelk in Kontakt mit den Filtern kommt, bzw. dass das Gemelk oder eine andere Flüssigkeit, die in den Separationsbehälter eingeführt wird, zu der Filtereinrichtung 30 gelangt, ist eine Überlaufsicherung 37 vorgesehen. In dem konkreten Ausführungsbeispiel umfasst die Überlaufsicherung einen Käfig 38, in dem ein Schwimmkörper 39 angeordnet ist. Bei dem Schwimmkörper 39 handelt es sich um einen kugelförmig ausgebildeten Körper.

Die Überlaufsicherung kann auch in anderer Art und Weise ausgestaltet sein. Sie kann auch Ventile oder Klappen aufweisen, die die Öffnung 35 verschließen, wenn ein kritisches Flüssigkeitsniveau innerhalb des Separationsbehälters vorliegt. Bei der Flüssigkeit kann es sich um ein Gemelk handeln. Es besteht auch die Möglichkeit, dass für Reinigungszwecke Reinigungsflüssigkeit in den Separationsbehälter eingeführt wird. Auch in einem solchen Fall soll vermieden werden, dass die Filtereinrichtung durch die Flüssigkeit geflutet wird, was zu einer Zerstörung der sich innerhalb der Filtereinheit befindenden Filter führen kann. Darüber hinaus wird durch die Verschlusseinrichtung sichergestellt, dass die Flüssigkeit nicht in das nachfolgende Leitungssystem eingeführt wird.

Zu Separation einer bestimmten Flüssigkeitsmenge, z. B. eines Gemelks aus einem luft- und flüssigkeitsführenden Schlauchsystem, vorzugsweise einem Melkzeug, wird vor dessen Anschlussstelle an einem Rohrleitungssystem, beispielsweise einer Melkanlage, ein Separationsbehälter eingesetzt, über dessen Verschlusseinheit, insbesondere den Deckel die Anbindung des Separationsbehälters an das Rohrleitungssystem mittels eines Vakuumschlauchs unter Vakuum erfolgt. Mit Hilfe der Erfindung kann der Separationsbehälter derart an das Rohrleitungssystem z. B. einer Melkanlage angeschlossen werden, dass weder die zur separierende Flüssigkeit noch Aerosole des Luftstroms in das Rohrleitungssystem übertreten können. Hierzu hat in dem dargestellten Ausführungsbeispiel die Verschlusseinheit eine Filtereinrichtung, die in Strömungsrichtung der Luft betrachtet vor einem ersten Anschlussstutzen eine Filterkammer aufweist, die wenigstens einen Filter enthält, der zum Rückhalt von Aerosolen in der Luft dient. Darüber hinaus weist der Separationsbehälter eine Überlaufsicherung auf, die zum Rückhalt der Flüssigkeit dient, wenn im Separationsbehälter ein kritisches Flüssigkeitsniveau erreicht worden ist. Bei Melkanlagen kann es auch zweckmäßig sein, einen Vakuumschlauch vorzusehen, der eine Filtereinrichtung nach der Erfindung umfasst.

### Bezugszeichenliste

- 1: Filtereinrichtung
- 2: Filtergehäuse
- 3: Einlass
- 4: Konische Erweiterung
- 5: Filterelement
- 6: Filter
- 7: Träger
- 8: Ringförmiger Raum
- 9: Aulass
- 10: Konische Reduzierung
- 11: Element
- 12: Endabschnitt
- 13: Luftstrom
- 14: Sperrmittel
- 15: Teller
- 16: Bereich
- 20: Separationsbehälter
- 21: Gehäuse
- 22: Öffnung
- 23: Verschlusseinheit
- 24: Dichtring
- 25: Platte
- 26: Erster Anschlussstutzen
- 27: Zweiter Anschlussstutzen
- 28: Milchfluss
- 29: Bohrung
- 30: Filtereinrichtung
- 32: Filtergehäuse
- 32: Kammer
- 33: Filterelement
- 34: Filterdeckel
- 35: Öffnung
- 36: Luftstrom
- 37: Überlaufsicherung
- 38: Käfig
- 39: Schwimmkörper

## Patentansprüche

1. Filtereinrichtung mit einem Filtergehäuse (2) und mit wenigstens einem Filterelement (5), das im Filtergehäuse (2) angeordnet ist, wobei das Filterelement (5) von einem Luftstrom aus einem Separationsbehälter für ein Gemelk durchströmbar ist.

2. Filtereinrichtung nach Anspruch 1, **dadurch gekennzeichnet, dass** das Filterelement (5) auswechselbar im Filtergehäuse (2) angeordnet ist.

3. Filtereinrichtung nach Anspruch 1, **dadurch gekennzeichnet, dass** diese einteilig ausgebildet ist.

4. Filtereinrichtung nach Anspruch 1, 2 oder 3, **dadurch gekennzeichnet, dass** diese Anzeigemittel aufweist, die wenigstens eine Zustandsgröße des wenigstens einen Filterelementes (5) wiedergeben.

5. Filtereinrichtung nach Anspruch 5, **dadurch gekennzeichnet, dass** die Anzeigemittel optische und/oder akustische Mittel sind.

6. Filtereinrichtung nach Anspruch 4 oder 5, **dadurch gekennzeichnet, dass** das Filtergehäuse (2) wenigstens einen durchsichtigen Bereich (16) aufweist, durch den das wenigstens eine Filterelement (5) erkennbar ist.

7. Filtereinrichtung nach einem der Ansprüche 1 bis 6, **dadurch gekennzeichnet, dass** das wenigstens ein Filterelement (5) wenigstens teilweise so ausgebildet ist, das dieses mit wenigstens einem im Luftstrom enthaltenen Bestandteil eine Wechselwirkung eingehen kann.

8. Filtereinrichtung nach einem der Ansprüche 1 bis 7, **dadurch gekennzeichnet, dass** das wenigstens ein Filterelement (5) ein Elektrofilter ist.

9. Filtereinrichtung nach einem der Ansprüche 1 bis 8, **dadurch gekennzeichnet, dass** das Filterelement (5) einen Filter (6) aufweist, der mit einem Träger (7) verbunden ist.

10. Filtereinrichtung nach einem der Ansprüche 1 bis 9, **dadurch gekennzeichnet, dass** das wenigstens eine Filterelement (5) im wesentlichen zylinderförmig ausgebildet ist.

11. Filtereinrichtung nach Anspruch 10, **dadurch gekennzeichnet, dass** zwischen dem Filterelement (5) und dem Innenmantel des Gehäuses (2) ein im wesentlichen ringförmiger Raum (8) vorgesehen ist, der vom Luftstrom (13) durchströmt wird.

12. Filtereinrichtung nach Anspruch 11, **dadurch gekennzeichnet, dass** das Filtergehäuse (2) einen Einlass (3) und einen Auslass (9) aufweist, wobei der durch den Einlass (3) in das Filtergehäuse (2) strömende Luftstrom (13) in den Raum (8) einströmt und durch das Filterelement (5) zum Auslass (9) strömt.

13. Filtereinrichtung nach Anspruch 11, **dadurch gekennzeichnet, dass** das Filtergehäuse (2) einen Einlass (3) und einen Auslass (9) aufweist, wobei der durch den Einlass (3) in das Filtergehäuse (2) strömende Luftstrom (13) durch das Filterelement (5) in den Raum (8) und durch den Auslass (9) ausströmt.

14. Filtereinrichtung nach einem der Ansprüche 1 bis 13, **dadurch gekennzeichnet, dass** diese wenigstens zwei hintereinander durchströmbare Filterelemente (5) aufweist.

15. Filtereinrichtung nach einem der Ansprüche 1 bis 14, dass diese wenigstens zwei parallel durchströmbare Filterelemente (5) aufweist.

16. Filtereinrichtung nach einem der Ansprüche 1 bis 15, **dadurch gekennzeichnet, dass** wenigstens ein Feinfilterelement und wenigstens ein Grobfilterelement vorgesehen sind.

17. Filtereinrichtung nach einem der Ansprüche 1 bis 16, in Strömungsrichtung betrachtet vor dem Filterelement (5) wenigstens ein Sperrmittel (14) vorgesehen ist, durch welches der Strömungsweg absperrbar ist.

18. Filtereinrichtung nach Anspruch 17, **dadurch gekennzeichnet, dass** das Sperrmittel (14) so ausgebildet ist, dass das Sperrmittel (14) in Abhängigkeit von einer Flüssigkeit, insbesondere von Milch aktiviert wird.

19. Filtereinrichtung nach einem der Ansprüche 1 bis 18, **dadurch gekennzeichnet, dass** diese eine Einheit aufweist, mittels derer eine Flüssigkeit gesammelt und/oder abgeschieden wird.

20. Vakuumschlauch zur Verbindung eines Separationsbehälters für ein Gemelk mit einer Leitung, wobei der Vakuumschlauch wenigsten eine Filtereinrichtung nach einem der Ansprüche 1 bis 19 umfasst, vorzugsweise eine Filtereinrichtung, die wenigstens ein Filterelement (5) aufweist, welches mindestens einen scheibenförmigen Filter aufweist.

21. Vakuumschlauch nach Anspruch 20, **dadurch gekennzeichnet, dass** das die wenigstens eine Filtereinrichtung lösbar mit dem Vakuumschlauch verbunden ist.

22. Vakuumschlauch nach Anspruch 21, **dadurch gekennzeichnet, dass** das Gehäuse der Filtereinrichtung ein integraler Bestandteil des Vakuumschlauchs ist.

23. Verschlusseinheit, insbesondere Deckel für einen Separationsbehälter zur Separation eines Gemelks, wobei die Verschlusseinheit (23) einen ersten Anschlussstutzen (26) für einen Vakuumschlauch und einem zweiten Anschlussstutzen (27) für einen Milchschlauch aufweist, **dadurch gekennzeichnet, dass** diese wenigstens eine Filtereinrichtung (30) mit wenigstens einem Filterelement (33) umfasst, wobei das Filterelement (33) im Strömungsweg eines Luftstroms zum ersten Anschlussstutzen (26) angeordnet ist.

24. Verschlusseinheit nach Anspruch 23, **dadurch gekennzeichnet, dass** die Filtereinrichtung (30) nach einem der Ansprüche 2 bis 19 ausgebildet ist.

25. Verschlusseinheit nach Anspruch 23 oder 24, **dadurch gekennzeichnet, dass** diese eine Überlaufsicherung (37) aufweist.

26. Verschlusseinheit nach Anspruch 25, **dadurch gekennzeichnet, dass** die Überlaufsicherung (37) einen Schwimmkörper (39) aufweist, der dazu geeignet ist, eine Öffnung (35) zu verschließen.

27. Separationsbehälter (20) zur Separation eines Gemelks mit einem ersten Anschlussstutzen (26) für einen Vakuumschlauch und einem zweiten Anschlussstutzen (27) für einen Milchschlauch, **dadurch gekennzeichnet, dass** der Separationsbehälter (20) wenigstens eine Filtereinrichtung (30) mit wenigstens einem Filterelement (33) aufweist, wobei das Filterelement (33) im Strömungsweg eines Luftstroms (36) zum ersten Anschlussstutzen (26) angeordnet ist.

28. Separationsbehälter nach Anspruch 27, wobei die Filtereinrichtung (30) nach einem der Ansprüche 2 bis 19 ausgebildet ist.

29. Separationsbehälter nach Anspruch 27 oder 28, **dadurch gekennzeichnet, dass** dieser eine Überlaufsicherung (37) aufweist.

30. Separationsbehälter nach Anspruch 29, **dadurch gekennzeichnet, dass** die Überlaufsicherung (37) einen Schwimmkörper (39) aufweist, der dazu geeignet ist, eine Öffnung (35) zu verschließen.

31. Separationsbehälter (20) zur Separation eines Gemelks mit einem Gehäuse (21), das eine Öffnung (22) aufweist, die durch eine Verschlusseinheit (23) verschließbar ist, wobei die Verschlusseinheit (23) einen ersten Anschlussstutzen (26) für einen Vakuumschlauch und einem zweiten Anschlussstutzen (27) für einen Milchschlauch aufweist, **dadurch gekennzeichnet, dass** die Verschlusseinheit (23) wenigstens eine Filtereinrichtung (30) mit wenigstens einem Filterelement (33) umfasst, wobei das Filterelement (33) im Strömungsweg eines Luftstroms (36) zum ersten Anschlussstutzen (26) angeordnet ist.

32. Separationsbehälter nach Anspruch 31, **dadurch gekennzeichnet, dass** die Verschlusseinheit (23) nach einem der Ansprüche 23 bis 26 ausgebildet ist.
